(19) Europäisches Patentamt
European Patent Office
Office européen des brevets

(11) EP 3 596 158 B1

(12) EUROPEAN PATENT SPECIFICATION

(45) Date of publication and mention of the grant of the patent:
**21.04.2021 Bulletin 2021/16**

(21) Application number: **18717454.5**

(22) Date of filing: **16.03.2018**

(51) Int Cl.:
*C08G 77/12* (2006.01) *C08G 77/20* (2006.01)
*C09J 183/04* (2006.01) *C08L 83/04* (2006.01)

(86) International application number:
**PCT/US2018/022818**

(87) International publication number:
**WO 2018/170370 (20.09.2018 Gazette 2018/38)**

(54) **SILICONE RELEASE COATING COMPOSITIONS**

SILIKON-TRENNBESCHICHTUNGSZUSAMMENSETZUNGEN

COMPOSITION DE REVÊTEMENT ANTI-ADHÉSIF DE SILICONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2017 US 201762472538 P**

(43) Date of publication of application:
**22.01.2020 Bulletin 2020/04**

(73) Proprietor: **Dow Silicones Corporation**
**Midland, MI 48686-0994 (US)**

(72) Inventors:
- **DASH, Aswini K.**
**Midland**
**Michigan 48642 (US)**
- **NIU, Zhenbin**
**Midland**
**Michigan 48642 (US)**
- **RICH, David A.**
**Midland**
**Michigan 48642 (US)**

(74) Representative: **Murgitroyd & Company**
**Murgitroyd House**
**165-169 Scotland Street**
**Glasgow G5 8PL (GB)**

(56) References cited:
**WO-A1-03/050174** **WO-A1-2006/055233**
**WO-A2-2004/046267** **US-A- 4 530 989**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 596 158 B1

## Description

This disclosure relates to polysiloxane release coating compositions. Single sided liners, e.g. backing sheets for pressure sensitive adhesive labels, are usually adapted to temporarily retain the labels without affecting the adhesive properties of the labels. Double sided liners, e.g. interleaving sheets for double sided and transfer tapes, are utilized to ensure the protection and desired unwind characteristics of a double sided self-adhesive tape or adhesive film.

A substrate, e.g. a single sided liner, is coated by applying a polysiloxane based release coating composition from a source, e.g. a bath of the release coating composition onto the substrate and subsequently curing the composition, by e.g. thermally initiated hydrosilylation. The release coating is required to adhere well to the liner while having relatively low adhesion to the adhesive so that the label can be removed from the liner by a predetermined peel force and then applied and permanently adhered to an appropriate substrate.

The substrates for both single and double sided liners have traditionally been paper, and the temperature at which the polysiloxane based release coating is cured is usually at least 130°C. Increasingly, the packaging industry wishes to use alternative substrates including thermally sensitive substrates such as low density polyethylene (LDPE), high density polyethylene (HDPE), polypropylene (PP), biaxially oriented polypropylene (BOPP), polyethylene coated Kraft paper (PEK), and temperature sensitive papers.

The required curing temperature for the polysiloxane based release coating on such thermally sensitive substrates is low, for example in the range 70°C to 90°C, e.g. 85°C. It is desirable for polysiloxane release coating compositions to be capable of curing in an acceptable time at such temperatures, while being stable at ambient temperature to avoid premature curing during storage and transport.

A polysiloxane compound contains several Si-O-Si- bonds forming a polymeric chain, where the repeating unit contains -(Si-O)-. An organopolysiloxane, sometimes called a silicone, contains repeating -(Si-O)- units where at least one silicon atom bears at least one organic group (i.e. a group containing at least one carbon atom). A polysiloxane comprises terminal groups and pendant groups. A terminal group is a chemical group located on a silicon atom that is at an end of the polymer chain. A pendant group is a group located on a silicon atom which silicon atom is not at the end of the polymeric chain.

A polysiloxane may comprise at least one of the following units: M unit (monofunctional), D unit (di-functional), T unit (tri-functional), and/or Q unit (tetra-functional). M units typically have the formula $R^1R^2R^3SiO_{1/2}$. D units typically have the formula $R^2R^3SiO_{2/2}$. T units typically have the formula $R^4SiO_{3/2}$. Q units typically have the formula $SiO_{4/2}$. $R^1$, $R^2$, $R^3$, and $R^4$ are each a substituent, typically an organic substituent. Each substituent $R^1$, $R^2$, $R^3$, and $R^4$ can be selected, e.g., from alkyl, aryl, alkenyl, acrylate, methacrylate and other groups. Examples of alkenyl groups include those having 2 to 6 carbon atoms, e.g. vinyl or hexenyl groups.

A linear polysiloxane typically contains only D units and terminal M units. A branched polysiloxane, which may be a resin, typically contains at least one T unit and/or at least one Q unit. Resins are 3-dimensional structures containing a plurality of T and/or Q units. For example, an MQ resin is an organopolysiloxane containing a plurality of interlinked Q units and terminal M units.

Hydrosilylation is an addition reaction where a compound containing at least one unsaturated group reacts with a compound containing at least one Si-H group. An unsaturated group, which may alternatively be called an ethylenically unsaturated group, is a group comprising a double or triple bond between two atoms. The bonded atoms may be carbon atoms or carbon-heteroatoms. For example, an unsaturated group may be alkynyl or alkenyl, e.g. a vinyl or hexenyl, group. A hydrocarbyl group is a univalent radical derived from a hydrocarbon, such as alkyl, cycloalkyl, or aryl groups.

A polysiloxane based release coating composition generally comprises a polysiloxane containing alkenyl groups, an organohydrogenpolysiloxane cross-linking agent, and a hydrosilylation catalyst effective to catalyse the reaction between the alkenyl groups and the Si-H groups. The release coating composition usually requires an inhibitor to prevent the cure of the coating composition from occurring below a predetermined temperature. While an inhibitor is not essential to the functioning of the coating composition itself, in the absence of an inhibitor, the catalyst may initiate/catalyse the cure of the silicone based release coating composition at ambient temperature, once the three above constituents have been mixed together.

US-B2-6806339 describes a release coating composition comprising a branched polysiloxane containing alkenyl or alkynyl units, an organohydrogenpolysiloxane cross-linking agent in an amount such that the ratio of the total number of Si-H groups in the composition to aliphatically unsaturated hydrocarbon groups in the composition is from 0.9:1 to 3:1, and a hydrosilylation catalyst effective to catalyse the reaction between the branched siloxane and the cross-linking agent. The branched siloxane consists of one or more Q units of the formula ($SiO_{4/2}$), 15 to 995 D units of the formula $R^b_2SiO_{2/2}$, and M units of the formula $R^aR^b_2SiO_{1/2}$, wherein each $R^a$ substituent is an alkyl, alkenyl or alkynyl group having from 1 to 6 carbon atoms, at least three $R^a$ substituents in the branched siloxane being alkenyl or alkynyl units, and each $R^b$ substituent is selected from the group consisting of an alkyl group having from 1 to 6 carbon atoms, an alkenyl group having 2 to 6 carbon atoms, an aryl group, an alkoxy group, an acrylate group and a methacrylate group.

US-A-4530989 describes room temperature stable organopolysiloxane compositions containing organosilicon

compounds having Si-bonded atoms and aliphatic multiple bonds, a platinum catalyst, and an inhibitor which is a maleinimide or a maleic acid derivative of the formula $R^1$-C(O)-CH=CH-C(O)-$R^2$, where $R^1$ is a hydroxyl or trimethylsiloxy group and $R^2$ is a hydrocarbonoxy radical.

US-B-7238755 describes crosslinkable silicone coating compositions comprising organosilicon compounds having radicals containing aliphatic carbon-carbon multiple bonds, organosilicon compounds containing Si-bonded hydrogen atoms, catalysts which promote the addition of Si-bonded hydrogen onto aliphatic multiple bond, and optionally inhibitors, and an anti-misting additive which is a liquid branched polysiloxane containing alkenyl groups formed by reaction of $\alpha,\omega$-dialkenylsiloxane polymers with organosilicon compounds containing at least 3 Si-bonded hydrogen atoms per molecule.

US-A-4609574 describes a curable release coating composition comprising an olefinic polydiorganosiloxane, a metal hydrosilylation catalyst, a methylhydrogenpolysiloxane, and an inhibitor for the hydrosilylation catalyst. The olefinic polydiorganopolysiloxane is made up of diorganosiloxane units and chain terminating units. It contains unsaturated radicals containing higher alkenyl radical containing at least 6 carbon atoms.

WO 03/050174 describes polyaddition-curable polyorganosiloxane compositions including a mixture based on a platinum group metal catalyst, an inhibitor of platinum group metal catalysts, and a pyridylamine ligand.

WO-A-2006/055233 describes a silicone release coating composition comprising an organopolysiloxane containing at least two alkenyl groups, a hydrogenopolysiloane containing at least two Si-H groups, a platinium hydrosilylation catalyst and one or more inhibitors. The inhibitors include acetylenic compounds, unsaturated hydrocarbon diesters such as maleate or fumarate and ethenyl cyclohexyn-1-ol.

WO-A-2004/046267 describes a silicone release coating composition comprising an organopolysiloxane containing at least two alkenyl groups, a hydrogenopolysiloane containing at least two Si-H groups, a platinium hydrosilylation catalyst and a additional polyorganosiloxane having a viscosity of 10-200,000 mPa.s. The compositions may further comprise one or more inhibitors. The inhibitors used include acetylenic compounds, unsaturated hydrocarbon diesters such as maleate or fumarate and ethenyl cyclohexyn-1-ol.

## BRIEF SUMMARY OF THE INVENTION

There is provided herein, according to a first aspect of this disclosure, a curable polysiloxane release coating composition ("composition"). The composition comprises (A) an organopolysiloxane containing ethylenically unsaturated groups. Component (A) is selected from: (A1) a branched organopolysiloxane containing at least three (3) organopolysiloxane branch chains with at least two (2) of the organopolysiloxane branch chains containing an ethylenically unsaturated group; and/or (A2) a linear organopolysiloxane containing at least 2 ethylenically unsaturated groups having at least six (6) carbon atoms. The composition further comprises (B) an organopolysiloxane containing at least 2 Si-H groups per molecule. If component (A) contains only 2 ethylenically unsaturated groups, component (B) contains on average more than 2 Si-H groups per molecule. The composition further comprises (C) a hydrosilylation catalyst. Component (C) comprises a platinum group metal or a complex or compound of a platinum group metal. The composition yet further comprises (D) a hydrosilylation inhibitor. Component (D) comprises a maleimide of the general formula (I):

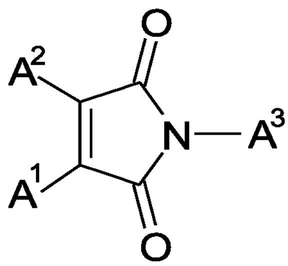

(I);

wherein $A^3$ represents a hydrogen atom or a hydrocarbyl or substituted hydrocarbyl group having 1 to 18 carbon atoms, and $A^1$ and $A^2$ each represent a hydrogen atom or a hydrocarbyl or substituted hydrocarbyl group having 1 to 18 carbon atoms.

Also provided herein, according to second aspect of this disclosure, is a process of applying a polysiloxane release coating on the surface of a substrate. Further provided herein, according to a third aspect of this disclosure, is use of the maleimide of the general formula (I) as a hydrosilylation inhibitor in a curable polysiloxane release coating composition.

DETAILED DESCRIPTION OF THE INVENTION

The curable polysiloxane release coating composition ("composition") of this disclosure comprises components (A), (B), (C), and (D). Optionally, the composition may further comprise one or more additional components.

Component (A) is an organopolysiloxane containing ethylenically unsaturated groups. In various embodiments, component (A) is selected from: (A1) a branched organopolysiloxane containing at least three (3) organopolysiloxane branch chains with at least two (2) of the organopolysiloxane branch chains containing an ethylenically unsaturated group; and/or (A2) a linear organopolysiloxane containing at least 2 ethylenically unsaturated groups having at least six (6) carbon atoms. In other words, component (A) may comprise component (A1), component (A2), or components (A1) and (A2).

In certain embodiments, the organopolysiloxane (A) contains at least 3 ethylenically unsaturated groups per molecule; although, organopolysiloxanes (A) containing only 2 ethylenically unsaturated groups per molecule can be used successfully with an organopolysiloxane (B) containing on average more than 2 Si-H groups per molecule.

Component (A1) is a branched organopolysiloxane containing at least 3 organopolysiloxane branch chains with at least 2 of the organopolysiloxane branch chains containing an ethylenically unsaturated group. In further embodiments, component (A1) is a branched organopolysiloxane comprising at least 3 organopolysiloxane branch chains each of which contains an ethylenically unsaturated group.

Examples of suitable branched organopolysiloxanes (A1) are terminated by units of the formula $R^aR^b{}_2SiO_{1/2}$ (M units) and comprise one or more units of the formula $SiO_{4/2}$ (Q units) or of the formula $R^cSiO_{3/2}$ (T units) and 15 to 995 units of the formula $R^b{}_2SiO_{2/2}$ (D units). Each $R^a$ substituent is selected from an alkyl group having 1 to 6 carbon atoms and an ethylenically unsaturated alkenyl group having 2 to 6 carbon atoms, with at least 3 $R^a$ substituents in the branched organopolysiloxane being ethylenically unsaturated alkenyl groups. Each $R^b$ substituent is an alkyl group having 1 to 6 carbon atoms or an aryl group. Each $R^c$ substituent is selected from an alkyl group having 1 to 6 carbon atoms, an ethylenically unsaturated alkenyl group having 2 to 6 carbon atoms, an aryl group or an alkoxy group having 1 to 6 carbon atoms.

In various embodiments, at least about 50%, optionally at least about 75%, optionally at least about 90%, or optionally substantially all, of the $R^a$ substituents are ethylenically unsaturated alkenyl groups. Each ethylenically unsaturated group in the branched organopolysiloxane (A1) may be, e.g., selected from vinyl, allyl, butenyl, pentenyl and hexenyl groups, but also can be longer chain alkenyl groups, e.g., 5-hexenyl, 6-heptenyl, 7-octenyl, 8-nonenyl, 9-decenyl or 10-undecenyl. In certain embodiments, each ethylenically unsaturated group of component (A1) is selected from vinyl and hexenyl groups. Polymers containing different ethylenically unsaturated groups, e.g. having vinyl and hexenyl groups on the same polymer, can be used, as can mixtures of polymers, e.g. a mixture of vinyl-functional and hexenyl-functional polymers.

Each $R^b$ substituent can be, e.g., an alkyl group, such as a methyl, an ethyl, a propyl, an isopropyl, a butyl, a pentyl, or a hexyl, group. In certain embodiments, each $R^b$ substituent is selected from methyl and ethyl groups. In further embodiments, each $R^b$ substituent is a methyl group.

In various embodiments, component (A1) contains at least 2, optionally at least 3, polydiorganosiloxane chains of the formula $(R^b{}_2SiO_{2/2})_n$ wherein each n is independently from 2 to 100. In certain embodiments, component (A1) is branched and comprises one or more "central" Q units of the formula $(SiO_{4/2})$. In further embodiments, four (4) branched chains extend from the central Q unit. In certain embodiments, component (A1) may consist mainly of organopolysiloxane molecules of the general formula:

$$\begin{array}{c} \text{O-}(R^b{}_2\text{SiO})_n\text{-Si}R^aR^b{}_2 \\ | \\ R^aR^b{}_2\text{Si-O-}(R^b{}_2\text{SiO})_n\text{-Si-O-}(R^b{}_2\text{SiO})_n\text{-Si}R^aR^b{}_2 \\ | \\ \text{O-}(R^b{}_2\text{SiO})_n\text{-Si}R^aR^b{}_2 \end{array}$$

wherein each n is independently from 1 to 100. The preparation of branched organopolysiloxanes (A1) comprising one or more core units of the formula $(SiO_{4/2})$ is described in US-B2-6806339.

Branched organopolysiloxanes (A1) comprising one or more units of the formula $R^cSiO_{3/2}$ and 15 to 995 units of the formula $R^b{}_2SiO_{2/2}$ can be prepared by mixing a compound having the general formula $(R^cSiO_{3/2})(R^aR^b{}_2SiO_{1/2})_3$ with a cyclic polydiorganosiloxane and/or a substantially linear hydroxyl terminated polydiorganosiloxane, and causing the mixture to react in the presence of an acid or phosphazene base catalyst at a temperature of up to about 180°C.

Component (A2) is a linear organopolysiloxane containing at least 2 ethylenically unsaturated groups having

at least 6 carbon atoms. Such linear organopolysiloxanes (A2) are effective in release coatings which cure at lower temperatures (such as, e.g., from about 70°C to about 90°C). For component (A2), each ethylenically unsaturated group is required to have at least 6 carbon atoms. Each ethylenically unsaturated group can be, e.g., 5-hexenyl, 6-heptenyl, 7-octenyl, 8-nonenyl, 9-decenyl, or 10-undecenyl. In certain embodiments, each of the ethylenically unsaturated groups of component (A2) are hexenyl groups.

A linear organopolysiloxane (A2) containing at least 2 hexenyl groups can, e.g., contain hexenylmethylsiloxane units and/or hexenyldimethylsiloxane units. In certain embodiments, component (A2) comprises, or is, a 5-hexenyldimethylsiloxane end-blocked copolymer of dimethylsiloxane units and 5-hexenylmethylsiloxane units.

The ethylenically unsaturated groups may be present as about 0.2 to about 5.0 weight (wt.)%, optionally from about 0.5 to about 4.0 wt.%, optionally from about 0.8 to about 4.0 wt.%, optionally from about 1.1 to about 4.0 wt.%, optionally from about 0.5 to about 1.8 wt.%, optionally from about 0.8 to about 1.8 wt.%, or optionally from about 1.1 to about 1.8 wt.%, of the silicon-bonded organic groups of the linear organopolysiloxane (A2). This weight percent is calculated on basis of the weight of the alkenyl units compared to the total weight of the linear organopolysiloxane (A2). In certain embodiments, about 1.0 to about 4.0 wt.% or mole percent of the diorganosiloxane units of a 5-hexenyldimethylsiloxane end-blocked copolymer of dimethylsiloxane units and 5-hexenylmethylsiloxane units are 5-hexenylmethylsiloxane units.

Component (A2) may have a viscosity of not less than about 50 mPa.s and not more than about 10000 mPa.s at 25°C. Viscosity can be determined by using a Brookfield DV-II viscometer using the appropriate spindle. In various embodiments, such as in solventless compositions, component (A2) has a viscosity of from about 50 to about 1000 mPa.s at 25°C. In such embodiments, the number of siloxane units in the linear organopolysiloxane (A2) (the degree of polymerization "DP") can be from about 20 to about 1000, or optionally from about 20 up to about 250 or about 500.

In other embodiments, such as in solvent-based compositions, component (A2) has a viscosity greater than about 10000 mPa.s. In such embodiments, component (A2) can be a high molecular weight compound. For example, the DP can be significantly higher than about 1000, optionally higher than about 2000, optionally higher than about 3000, or optionally higher than about 4000. Such organopolysiloxanes (A2) can be so viscous only their viscosities in solution are measurable.

Component (B) comprises, or is, an organopolysiloxane containing at least 2 Si-H groups per molecule. In various embodiments, component (B) contains at least 3 Si-H groups per molecule. The Si-H groups can be present in terminal dialkylhydridosilyl groups and/or in alkylhydridosiloxane groups in the organopolysiloxane chain.

In certain embodiments, component (B) has the general formula:

$$R^t_3SiO_{1/2}((CH_3)_2SiO_{2/2})_d(R^t_2SiO_{2/2})_e)SiO_{1/2}R^t_3\ ;$$

wherein each $R^t$ substituent may be an alkyl group having 1 to 4 carbon atoms or a hydrogen atom. Subscript $d$ is 0 or an integer, and subscript $e$ is an integer such that $d + e$ is from 8 to 100.

In alternate or further embodiments, component (B) comprises, or is, an MQ resin consisting of units of the general formula $SiO_{4/2}$ and $R^q_3SiO_{1/2}$ wherein at least one $R^q$ substituent is a hydrogen atom and the remainder are alkyl groups. In further embodiments, each $R^t$ and $R^q$ substituent is a methyl group.

The H atom of Si-H groups may be present as about 0.5% to about 15 wt.% of the total Si-H and Si-alkyl groups in organopolysiloxane (B), for example about 0.8 or about 1.1 wt.% up to about 2 or about 5 wt.%. Such contents can be determined via titration.

The molar ratio of the total amount of Si-H groups in organopolysiloxane (B) to the total ethylenically unsaturated groups in organopolysiloxane (A) in the composition may be in the range of from about 0.5:1 to about 5:1, optionally from about 1.1:1 to about 2:1, or optionally from about 1.2:1 to about 2:1.

Suitable hydrosilylation catalysts (C) comprise platinum group metals (sometimes referred to as platinum metals) i.e. platinum, ruthenium, rhodium, palladium, osmium and iridium or complexes or compounds of a platinum group metal. In various embodiments, component (C) is selected from the group of platinum compounds or complexes including chloroplatinic acid, platinum acetylacetonate, complexes of platinous halides with unsaturated compounds, for example, ethylene, propylene, organovinylsiloxanes and styrene, hexamethyldiplatinum, $PtCl_2$, $PtCl_3$ and $Pt(CN)_3$. In certain embodiments, component (C) comprises Karstedt's catalyst, a coordination complex of platinum and divinyltetramethyldisiloxane produced by reaction of chloroplatinic acid and divinyltetramethyldisiloxane. In other embodiments, component (C) comprises a rhodium complex, e.g., $RhCl_3(Bu_2S)_3$.

Component (C) may be present in the composition at from about 10 to about 200 parts per million (ppm), optionally from about 30 to about 150 ppm, or optionally from about 50 or about 80 ppm up to about 120 ppm, by weight of a platinum group metal based on the total weight of the organopolysiloxane (A). In other embodiments, the aforementioned ppm ranges for component (C) are based on the total weight of components (A) and (B), or are based on the total weight of the composition.

The hydrosilylation inhibitor (D) comprises a maleimide of the general formula (I):

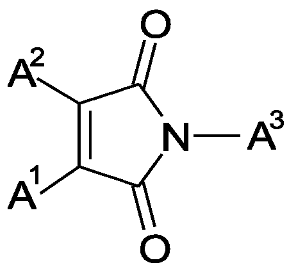

(I);

wherein $A^3$ represents a hydrogen atom or a hydrocarbyl or substituted hydrocarbyl group having 1 to 18 carbon atoms, and $A^1$ and $A^2$ each represent a hydrogen atom or a hydrocarbyl or substituted hydrocarbyl group having 1 to 18 carbon atoms. Each of the groups $A^1$, $A^2$, $A^3$ can be, e.g., hydrogen, alkyl, alkenyl, alicyclic, aryl, or aralkyl. Alkyl groups are exemplified by methyl, ethyl, propyl, butyl, tertiary butyl, pentyl, hexyl, heptyl, ethylhexyl, octyl, decyl, dodecyl, undecyl, and octadecyl. Alkenyl groups are exemplified by vinyl, allyl, propenyl, and hexenyl. Alicyclic groups are exemplified by cycloalkyl groups such as cyclopentyl and cyclohexyl, or cycloalkenyl groups such as cyclopentadienyl, cyclohexenyl, or cyclooctadienyl. Aryl groups are exemplified by phenyl, tolyl, xylyl, mesityl, and naphthyl. Aralkyl groups are exemplified by benzyl and 2-phenylethyl.

In various embodiments, each of the groups $A^1$ and $A^2$ represent a hydrogen atom but either can, e.g., be an alkyl group having 1 to 6 carbon atoms. Maleimides in which $A^1$ and $A^2$ each represent hydrogen and $A^3$ represents an alkyl group having 1 to 12 carbon atoms are generally readily compatible with the release coating composition formulation; N-alkylmaleimides in which the alkyl group has 1 to 12 carbon atoms, e.g. N-(n-propyl)maleimide or N-(t-butyl)maleimide, are thus suitable as hydrosilylation inhibitor (D). For example, N-alkylmaleimides in which the alkyl group has 1 to 12 carbon atoms, e.g. N-(n-propyl)maleimide can be added to the composition as a liquid with no special precaution needed for the resulting coating to demonstrate good curing performance.

Component (D), i.e. maleimide (I), can be used in the composition at a molar ratio of from about 1:1 to about 200:1, optionally from about 1:1 to about 100:1, optionally from about 5:1 to about 100:1, optionally from about 10:1 to about 100:1, optionally from about 1:1 to about 50:1, optionally from about 5:1 to about 50:1, or optionally from about 10:1 to about 50:1, maleimide (I) to platinum group metal of component (C).

In various embodiments, the aforementioned maleimide (I) is the sole hydrosilylation inhibitor (as component (D) or otherwise) in the release coating composition. In other words, the composition is free of hydrosilylation inhibitors other than component (D).

In alternate embodiments, the composition may further comprise a second hydrosilylation inhibitor (E). Component (E) can generally be any known hydrosilylation inhibitor other than component (D) above. For example, the second hydrosilylation inhibitor (E) can be selected from acetylenic compounds, e.g. acetylenic alcohols, ethylenically unsaturated isocyanates, acetylenically unsaturated silanes and unsaturated dicarboxylic acid diesters or a maleate compound such as a bismaleate or a diallylmaleate, or a mixture thereof. In certain embodiments, component (E) is an acetylenically unsaturated compound or a maleate compound or a mixture thereof.

In various embodiments, component (E) is selected from acetylenic compounds, such as acetylenically unsaturated alcohols. The acetylenic alcohol may be of the general formula:

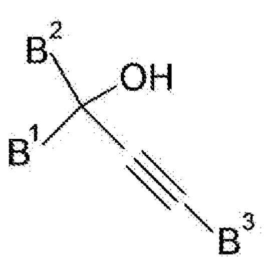

;

wherein $B^1$, $B^2$ and $B^3$ each represent a hydrogen atom or a hydrocarbyl or substituted hydrocarbyl group having 1 to 18 carbon atoms. For example, each of the groups $B^1$, $B^2$, $B^3$ can be hydrogen, alkyl, alkenyl, alicyclic, aryl, or aralkyl, or $B^1$ and $B^2$ can be joined to form a carbocyclic ring. Examples of acetylenic alcohols suitable as second hydrosilylation inhibitor (E) include methyl butynol, dimethyl hexynol or 1-ethynylcyclohexanol (ETCH), depicted below.

An example of an acetylenically unsaturated silane useful as second hydrosilylation inhibitor (E) is trimethyl(3,5-dimethyl-1-hexyn-3-oxy)silane. Examples of unsaturated dicarboxylic acid diesters include maleates, e.g. bis(2-methoxy-1-methylethyl) maleate, and fumarates, e.g. diethylfumarate or a fumarate/alcohol mixture wherein the alcohol is, for example, benzyl alcohol or 1-octanol. More than one second hydrosilylation inhibitor (E) can be present in the release coating composition, e.g., a fumarate or maleate with an acetylenically unsaturated alcohol such as 1-ethynylcyclohexanol (ETCH), depicted below:

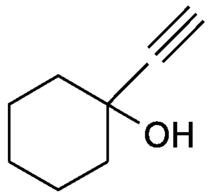

.

In embodiments where component (E) is present in the composition, the molar ratio of the hydrosilylation inhibitor (D) (i.e., the maleimide of formula (I)) to the second hydrosilylation inhibitor (E) present in the release coating composition may be from about 50:1 to about 1:50, optionally from about 10:1 to about 1:50, optionally from about 4:1 to about 1:50, optionally from about 4:1 to about 1:30, optionally from about 1:1 to about 10:1, or optionally from about 1:1 to about 4:1.

Release coating compositions as described herein containing hydrosilylation inhibitor (D) (i.e., the maleimide of formula (I)) and the second hydrosilylation inhibitor (E) have good curing properties at temperatures in the range of from about 70°C to about 100°C.

Other constituents which may also be present in the release coating compositions of this disclosure include, e.g., silicone release modifiers, fillers, reactive diluents, adhesion promoters, solvents, fragrances and preservatives. Examples of silicone release modifiers include alkenylated silicone resins, primary alkenes containing from 12 to 30 carbon atoms, and branched alkenes containing at least 10 carbon atoms. Examples of fillers include silica, quartz and chalk.

The release coating compositions of this disclosure may be applied without solvent (solventless compositions) or in a solvent (solvent-based compositions) or as part of an oil-in-water emulsion (water-based compositions). Solventless silicone release coating compositions have some important advantages over solvent-based coating compositions: fewer environmental, health, safety, and regulatory concerns; no solvent recovery equipment required; contain no carrier that must be driven off, so line speeds can be faster; and/or less likely to damage films.

The inventors have found that a release coating composition based on a linear organopolysiloxane (A2) (containing at least 2 ethylenically unsaturated groups containing at least 6 carbon atoms) cures faster at temperatures <100°C such as, e.g., temperatures in the range of from about 70°C to about 90°C relative to a coating composition based on a similar organopolysiloxane containing vinyl groups. The inventors have also found that a release coating composition based on a branched organopolysiloxane (A1) (containing at least 3 organopolysiloxane branch chains with at least 2 of the organopolysiloxane branch chains containing an ethylenically unsaturated group, optionally including at least 3 organopolysiloxane branch chains each of which contains an ethylenically unsaturated group) cures faster at temperatures <100°C such as, e.g., temperatures in the range of from about 70°C to about 90°C, relative to a coating composition based on a similar but unbranched organopolysiloxane.

However, release coating compositions generally require a hydrosilylation inhibitor to inhibit premature curing of the composition in a coating bath at ambient temperatures. For the release coatings which cure at temperatures <100°C, e.g. about 70°C to about 90°C, there may be a problem that the hydrosilylation inhibitor retards curing of the release coating on the substrate when the coating is stabilized by inhibitor at ambient temperature for significant time. The inventors have found that a maleimide of general formula (I) is an inhibitor (D) which gives significantly better performance curing properties for the release coating compositions described herein at low temperatures compared to traditional hydrosilylation inhibitors used under similar conditions. Furthermore, the introduction of the maleimide of general formula (I) as inhibitor (D) alone, or in combination with inhibitor (E), in the release coating composition provided cured release coatings similar to prior art coatings even with lower cure temperatures.

While release coating compositions of the present disclosure may be prepared by merely premixing components (A), (B), (C), and (D) together with any optional ingredients and the composition thus prepared can be applied successfully as a release coating, it may be more desired to prepare such compositions in separately packaged portions for storage and transport. In such a case, the portions can be combined at the time the composition is to be applied as a coating. Usually, when preparing a release coating composition in separately packaged portions or parts for storage and transport, the hydrosilylation catalyst should not be packaged with the organopolysiloxane containing Si-H groups. Many hydrosilylation inhibitors (E), such as acetylenically unsaturated alcohols, should not be packaged with the hydrosilylation catalyst (C).

The maleimide inhibitors (D) have the advantage that, unlike many known hydrosilylation inhibitors, they are

compatible with the hydrosilylation catalyst (C). Hence, when present in a two part composition component (E) should be in a different part from the hydrosilylation catalyst (C) but component (D) may be present in either or both of the 2 parts. This facilitates packaging as a 2-package composition.

One example of a packaged release coating composition according to this disclosure, which can be a 2-package system, comprises a first part comprising the organopolysiloxane (A) containing ethylenically unsaturated groups, the hydrosilylation catalyst (C) and the hydrosilylation inhibitor (D), and a second part comprising the organopolysiloxane (B) containing Si-H groups. The maleimide inhibitor (D) can be added to the hydrosilylation catalyst (C) and then mixed with the organopolysiloxane (A) to form the first part, or the maleimide inhibitor (D) can be added to the organopolysiloxane (A) followed by addition of the hydrosilylation catalyst (C).

Another example of a packaged release coating composition according to this disclosure, which can be a 2-package system, comprises a first part comprising the organopolysiloxane (A) containing ethylenically unsaturated groups and the hydrosilylation catalyst (C), and a second part comprising the organopolysiloxane (B) containing Si-H groups and the hydrosilylation inhibitor (D). In this 2-package system, the hydrosilylation inhibitor (D) can be a maleimide used as the only hydrosilylation inhibitor, or can be a mixture of a maleimide with second hydrosilylation inhibitor (E).

Another example of a packaged release coating composition according to this disclosure, which can be a 3-package system, comprises a first part comprising the organopolysiloxane (A) containing ethylenically unsaturated groups and hydrosilylation inhibitor (D), a second part containing the hydrosilylation catalyst (C), and a third part containing the organopolysiloxane (B) containing Si-H groups.

The release coating compositions of this disclosure can be applied to substrates such as paper and plastics, including thermally sensitive substrates such as low density polyethylene (LDPE), high density polyethylene (HDPE), polypropylene (PP), biaxially oriented polypropylene (BOPP), polyethylene coated Kraft paper (PEK), and temperature sensitive papers, using a conventional coating apparatus used for release coatings.

There is also provided a use of a maleimide of the general formula (I):

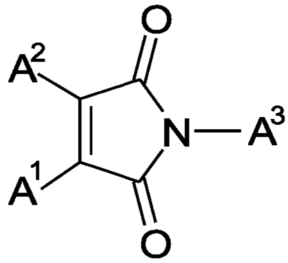

(I);

wherein $A^3$ represents a hydrogen atom or a hydrocarbyl or substituted hydrocarbyl group having 1 to 18 carbon atoms, and $A^1$ and $A^2$ each represent a hydrogen atom or a hydrocarbyl or substituted hydrocarbyl group having 1 to 18 carbon atoms, as a hydrosilylation inhibitor in a curable polysiloxane release coating composition. The maleimide of formula (I) is as described above for component (D). The composition is also as described above, i.e., the composition (further) comprises components (A), (B), and (C), optionally component (E), each as described above.

There is also provided a process of applying a polysiloxane release coating on the surface of a substrate. The process comprises the step of 1) coating the substrate with a curable polysiloxane release coating composition. The process further comprises the step of 2) curing the curable polysiloxane release coating composition at a temperature of from about 50°C to about 130°C to form the release coating on the substrate. The composition is as described above, i.e., the composition comprises components (A), (B), (C), and (D), optionally component (E), each as described above. A cured release coating formed from and/or obtained from the composition and/or the process of this disclosure is also provided.

The release coatings thus applied can be cured at temperatures (e.g. temperature of the curing oven) in the range of from about 50°C to about 100°C, or optionally from about 70°C up to about 90°C or about 95°C. Dwell time (i.e. the period of time the coating is cured in the curing oven) at these temperatures can for example be in the range of from about 1 to about 50 second(s), shorter dwell times generally corresponding to higher temperatures in this range. In certain embodiments, the dwell time is from about 2 to about 30 seconds, or optionally from about 2 to about 10 seconds. The release coating compositions of this disclosure can also be cured at temperatures of above 100°C with shorter dwell times.

The compositions of this disclosure are suitable, for example, for producing release, backing, and interleaving papers, for producing release, backing, and interleaving cards, films, and cloths, for treating the reverse sides of self-adhesive tapes or self-adhesive sheets or the written faces of self-adhesive labels. The compositions of this disclosure are additionally suitable for treating packing material, such as cardboard boxes, metal foils and drums, e.g., cardboard,

plastic, wood or iron, which is intended for storing and/or transporting tacky goods, such as adhesives, sticky foodstuffs, e.g., cakes, honey, candies, and meat; bitumen, asphalt, greased materials, and crude rubber.

The present invention is illustrated by the following Examples, which are intended to illustrate and not to limit the invention. The components used are the following. Six alternative polymers were prepared for use in the Examples as follows.

**A(i)**

A comparative linear polymer having vinyl alkenyl groups was prepared by mixing $CH_2=CHSi(CH_3)_2\{OSi(CH_3)_2\}_9-OSi(CH_3)_2CH=CH_2$ (52.0 g) and octamethylcyclotetrasiloxane (300.0 g) in a reaction vessel at room temperature (RT) under $N_2$ protection. The reaction mixture was heated up to 155°C and Dow Corning Sparc Base (0.01 g) was added. After 1 hour, the reaction mixture was cooled down and neutralized with hydrogen phosphate. The reaction mixture was filtered and stripped at 231°C/0-1torr. A light brown oil was obtained (280 g, yield = 80.0%). The final viscosity of the product was 118.0 mPa.s at 25°C. The number-averaged molecular weight was 5.0 kDa determined by multi-detector gel permeation chromatography (GPC) and the weight% of vinyl group was 1.13% (determined by titration).

**A(ii)**

A type (A1) polymer was prepared by mixing $Q-(DM^{vi})_4$ (128.0 g) and octamethylcyclotetrasiloxane (3.30 kg), in a reaction vessel at room temperature (RT) under $N_2$ protection. The reaction mixture was heated up to 155°C and Dow Corning Sparc Base (0.12 g) was added. After 1 hour, the reaction mixture was cooled down and neutralized with hydrogen phosphate. The reaction mixture was filtered and stripped at 231°C/0-1torr. A light brown oil was obtained (2.9 kg, yield = 85.0%). The final viscosity of the product was 296.0 mPa.s at 25°C and it was determined that the number-averaged molecular weight was 11.9 kDa determined by multi-detector GPC and the weight% of vinyl group was 0.90% (determined by titration).

**A(iii)**

A type (A2) linear dimethylhexenyl terminated dimethyl methylhexenyl copolymer was prepared. $Hex(Si(CH_3)_2OSi(CH_3)_2)Hex$ (2.43 kg), methyl(5-hexenyl)dichlorosilane hydrolyzate (1.57 kg) and octamethylcyclotetrasiloxane (9.0 kg) were mixed well in a reaction vessel at RT under $N_2$ protection. The reaction mixture was heated up to 155°C and Dow Corning Sparc Base (0.04 g) was added. After 1 hour, the reaction mixture was cooled down and neutralized with hydrogen phosphate. The reaction mixture was filtered and stripped at 231°C/0-1torr. A light brown oil was obtained (6.6 kg, yield = 83.0%). The final viscosity of the product was 230.0 mPa.s at 25°C. The number-averaged molecular weight was 8.3 kDa determined by multi-detector GPC and the weight% of alkenyl group was 0.90% (determined by titration).

**A(iv)**

A type (A1) polymer was prepared by mixing $Q-(DM^{hex})_4$ (0.53 kg) and octamethylcyclotetrasiloxane (4.00 kg), in a reaction vessel at RT under $N_2$ protection. The reaction mixture was heated up to 155°C and Dow Corning Sparc Base (0.19 g) was added. After 1 hour, the reaction mixture was cooled down and neutralized with hydrogen phosphate. The reaction mixture was filtered and stripped at 231°C/0-1torr. A light brown oil was obtained (3.3 kg, yield = 72.84%). The final viscosity of the product was 110.8 mPa.s at 25°C. The number-averaged molecular weight was 4.1 kDa determined by multi-detector GPC and the weight% of alkenyl group was 1.85% (determined by titration).

**A(v)**

A type (A1) polymer was prepared by mixing $Q-(D_nD^{hex}_mM^{hex})_4$ (0.28 kg), octamethylcyclotetrasiloxane (4.48 kg) and methyl(5-hexenyl)dichlorosilane hydrolyzate (0.22 kg) in a reaction vessel at RT under $N_2$ protection. The reaction mixture was heated up to 155°C and Dow Corning Sparc Base (0.16 g) was added. After 1 hour, the reaction mixture was cooled down and neutralized. The reaction mixture was filtered and stripped at 231°C/0-1torr. A light brown oil was obtained (4.14 kg, yield = 83.06%). The final viscosity of the product was 226.8 mPa.s at 25°C. The number-averaged molecular weight was 7.5 kDa determined by multi-detector GPC and the weight% of alkenyl group was 1.79% (determined by titration).

A(vi)

A type (A1) polymer was prepared by mixing $Q_n$-$(D_mM^{hex})_{2n+2}$ (0.46 kg) and octamethylcyclotetrasiloxane (7.08 kg) in a reaction vessel at RT under $N_2$ protection. The reaction mixture was heated up to 155°C and Dow Corning Sparc Base (0.26 g) was added. After 1 hour, the reaction mixture was cooled down and neutralized with hydrogen phosphate. The reaction mixture was filtered and stripped at 231°C/0-1torr. A light brown oil was obtained (6.23 kg, yield = 82.58%). The final viscosity of the product was 708.0 mPa.s at 25°C and it was determined that the number-averaged molecular weight was 9.4 kDa determined by multi-detector GPC and the weight% of alkenyl group was 0.93% (determined by titration).

The organopolysiloxane (B) used was a trimethylsiloxy-terminated Dimethyl, methylhydrogen siloxane having a viscosity of 34 mPa.s at 25°C having 1.05 mol% of Si-H groups.

The hydrosilylation catalyst (C) was Karstedt's catalyst.

The hydrosilylation inhibitor (D) was N-(n-propyl)maleimide:

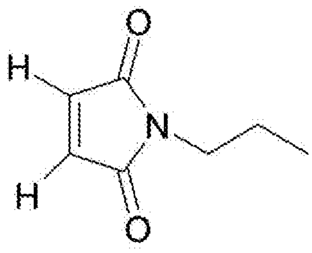

.

The optional additional inhibitor (E), when present, was 1-ethynylcyclohexanol (hereafter referred to as ETCH).

All viscosity measurements were undertaken using a Brookfield DV-II viscometer using the appropriate spindle unless otherwise indicated.

Unless stated otherwise, the substrate used for all examples was a 2 MIL biaxially oriented polypropylene film (BOPP) from Innovia Films.

## Coating process

Each release coating composition utilized in the following examples was applied and cured in the same manner, i.e. compositions were applied within 20 minutes of being mixed together on a substrate using a blade coater at room temperature (20°C). The resulting coating was cured in the cure oven at the specified temperature for a period (dwell time) as mentioned.

The cure performance (curing speed) and adhesion of the formed coating is typically evaluated by measuring the extractable percentage (extractables %) and Rub off Resistance (ROR) value. Best properties are obtained when the extractable % is low (i.e. the closer to zero the better) and ROR is high (i.e. the closer to 100% the better).

## Testing Procedure for Extractables:

To measure the cure performance of the compositions, an extractable test was undertaken immediately after cure. The extractable test was utilized to identify the amount of non-crosslinked silicone that was extractable from a cured release-coated sample in the presence of a solvent. The test method used for the following example was as follows.

Immediately upon completion of the coating process (described above) three sample discs were cut from a coated substrate using a 1.375 inch (3.49 cm) die cutter. The silicone coat weight on each sample was determined using an Oxford Instruments Lab-X 3500 Benchtop XRF analyser. Each disc was then placed in an individual 100-mL bottle containing 40 mL of methyl isobutyl ketone solvent. Tweezers were used for handling sample discs at all times to ensure that the silicone surface of the sample was not contaminated or damaged. The solvent bottles were then covered with lids and allowed to rest on the laboratory bench top for 30 minutes. After this period, the discs were removed from the solvent and placed on clean tissue paper, with the silicone coated side up. The solvent was allowed to evaporate from the sample discs without wiping or blotting the samples. The final coat weight of each sample disc was then determined.

The percent of extractable was calculated using the following formula:

$$Extractable\% = \frac{(W_i - W_f)}{W_i} \times 100\%$$

where $W_i$ = initial coat weight (before solvent introduction) and $W_f$ = final coat weight (after solvent evaporation).

**ROR Evaluations**

The ROR% test (sometimes referred to as anchorage index) measures the amount of cured silicone left after the coated substrate has been subjected to surface abrasion. It indicates how strong the cured coating film is anchored to the substrate; the higher the ROR% value the better. The ROR% is measured as soon as the coated substrate exits the curing oven. From each coated substrate, 2 sample discs are prepared and the silicone present in each sample disc of the coated substrate is then determined via an Oxford Instruments Lab-X 3500 Benchtop XRF analyser. Each sample disc of the coated substrate is then subjected to an abrasion test under a load of 1.9 kg and in contact with a felt using automated abrading equipment, in a manner similar to a 'Taber-type method'.

The ROR% is calculated as follows:

$$ROR\% = (W_f / W_i) \times 100$$

where $W_i$ is the initial coat weight (before abrasion) and $W_f$ = final coat weight (after abrasion).

**Example 1**

A comparative example providing a comparison of release coatings based on polymers A(i), A(ii) and A(iv) in terms of Extractable% and ROR% in the absence of hydrosilylation inhibitor (D).

The compositions used were: polymer A(i), A(ii), or A(iv); organopolysiloxane (B) in an amount such that the molar ratio of SiH:alkenyl groups in A was 2:1 mol/mol; Karstedt's catalyst (C) in an amount of 100 parts per million (ppm) by weight of platinum metal based on the total weight of the composition; and ETCH inhibitor (E) was present in an amount of 0.22 wt.% of the composition.

Curing conditions: samples were cured at a temperature of 85°C for dwell times of 4 seconds or 7 seconds. Substrate: 2 MIL biaxially orientated polypropylene (BOPP).

**Table 1**

| Curing Conditions | A(i) | | A(ii) | | A(iv) | |
|---|---|---|---|---|---|---|
| | Extractable% | ROR% | Extractable% | ROR% | Extractable% | ROR% |
| 85°C/4s | 43.5 | 1 | 35.8 | 11.7 | 15.27 | 91.15 |
| 85°C/7s | 21.4 | 37.8 | 15.8 | 55.5 | N/A | N/A |

Clearly, the branched vinyl polymer A(ii) demonstrated better curing performance compared with its linear analogue A(i) under the same low temperature curing conditions. In addition, the coating resulting from the composition containing A(iv) with hexenyl alkenyl groups is much better than A(ii) having vinyl alkenyl groups. However, the extractable% and ROR% of coatings made using polymers A(i) and A(ii) were in each case reasonably poor.

**Example 2**

Extractable% and ROR% of release coatings using N-(n-propyl)maleimide as inhibitor (D).

In this case the formulation utilized was: polymer A(iv); organopolysiloxane (B) in an amount such that the molar ratio of SiH:alkenyl groups in A(iv) was 2:1 mol/mol; Karstedt's catalyst (C) in an amount of 100 parts per million (ppm) by weight of platinum metal based on the total weight of the composition; and inhibitor (D) in an amount such that the molar ratio of component (D):Pt (mol/mol) was 31.5:1.

Curing conditions: 85°C for dwell times of 4s or 7s as indicated. Substrate: 2 MIL BOPP.

**Table 2**

| Curing Conditions | Extractable% | ROR% |
|---|---|---|
| 85°C/4s | 7.56 | 70.18 |
| 85°C/7s | 3.66 | 90.63 |
| 85°C/7s | 3.26 | 100.00 |

As can be seen, the coatings made from the composition containing A(iv) and N-(n-propyl)maleimide as inhibitor (D) provide acceptable curing performance at the targeted low temperature (85°C) curing conditions.

## Example 3

Extractable% and ROR% of release coatings using an N-(n-propyl)maleimide as inhibitor (D) with polymer A(v).

Other components of the composition were: organopolysiloxane (B) in an amount such that the molar ratio of SiH:alkenyl groups in A(v) was 2:1 mol/mol; Karstedt's catalyst (C) in an amount of 100 parts per million (ppm) by weight of platinum metal based on the total weight of the composition; and inhibitor (D) in an amount such that the molar ratio of component (D):Pt (mol/mol) was = 31.5/1.

Curing conditions: 90°C for dwell times of 4s or 7s; 85°C for dwell times of 4s or 7s, and 75°C for dwell times of 4s or 7s. Substrate: 2 MIL BOPP.

**Table 3**

| Curing Conditions | Extractable% | ROR% |
|---|---|---|
| 90°C/4s | 6.77 | 83.13 |
| 90°C/7s | 5.26 | 94.68 |
| 85°C/4s | 7.89 | 89.47 |
| 85°C/7s | 7.14 | 96.39 |
| 75°C/4s | 10.96 | 68.49 |
| 75°C/7s | 6.84 | 94.94 |

This shows the benefits of polymer A(v) which has hexenyl alkenyl groups in combination with N-(n-propyl)maleimide as inhibitor (D).

## Example 4

Comparison of release coatings based on diallyl maleate, ETCH and N-propyl maleimide in terms of Extractable% and ROR%. The composition used was: polymer A(iii); organopolysiloxane (B) in an amount such that the molar ratio of SiH:alkenyl groups in A(iii) was 2:1 mol/mol; Karstedt's catalyst (C) in an amount of 100 parts per million (ppm) by weight of platinum metal based on the total weight of the composition; and inhibitor (D) or (E) in an amount such that the molar ratio of inhibitor:Pt (mol/mol) was = 70/1.

Curing conditions: 100°C for a dwell time of 4s, 93°C for a dwell time of 4s, and 85°C for a dwell time of 4s. Substrate: 2 MIL BOPP.

**Table 4-A**

| Curing Conditions | Bis(1-methoxy-2-methylethyl) (bismaleate) (Comparative) | | Diallyl maleate (Comparative) | |
|---|---|---|---|---|
| | Extractable% | ROR% | Extractable% | ROR% |
| 100°C/4s | 24.87 | 23.28 | 25.12 | 33.29 |
| 93°C/4s | 57.21 | 4.54 | 53.96 | 6.42 |
| 85°C/4s | undercured | undercured | undercured | undercured |

**Table 4-B**

| Curing Conditions | 3,5-Dimethyl-1-hexyn-3-ol-(Surfynol-61) (Comparative) | | 1-ethynyl-1-cyclohexanol (ETCH) (e.g. Inhibitor (E)) | | N-(n-propyl)maleimide (e.g. Inhibitor (D)) | |
|---|---|---|---|---|---|---|
| | Extractable% | ROR% | Extractable% | ROR% | Extractable% | ROR% |
| 100°C/4s | 10.88 | 93.04 | 10.43 | 90.47 | 6.31 | 95.84 |
| 93°C/4s | 20.20 | 73.71 | 15.6 | 58.30 | 8.85 | 93.01 |
| 85°C/4s | 32.06 | 9.40 | 31.38 | 7.93 | 10 | 80.17 |

Here, the performance difference under low temperature cure conditions between major commercial inhibitors - bismaleate, diallyl maleate, Surfynol-61, and ETCH - and N-(n-propyl)maleimide can be seen clearly. By employing the N-(n-propyl)maleimide, the coating system can meet the curing performance requirement.

**Example 5**

Comparison of release coating curing performance based on ETCH (inhibitor (E)) and ETCH/ N-(n-propyl)maleimide (inhibitors (E) & (D)) in terms of extractable% and ROR%. The composition used was: polymer A(vi); organopolysiloxane (B) in an amount such that the molar ratio of SiH:alkenyl groups in A(vi) was 2:1 mol/mol; and Karstedt's catalyst (C) in an amount of 100 parts per million (ppm) by weight of platinum metal based on the total weight of the composition.

Curing conditions: 85°C for a dwell time of 4s, 80°C for a dwell time of 4s, and 75°C for a dwell time of 7s. Substrate: 2 MIL BOPP.

**Table 5**

| **85°C/4s** | **Extractable%** | **ROR%** |
|---|---|---|
| 0.22wt.% ETCH | 14.7 | 51.30 |
| 0.17wt.% ETCH / 0.039wt.% N-(n-propyl)maleimide | 5 | 100 |
| 0.21wt.% ETCH / 0.137wt.% N-(n-propyl)maleimide | 6.8 | 97.1 |
| 0.25wt.% ETCH / 0.039wt.% N-(n-propyl)maleimide | 5.6 | 98.6 |
| **80°C/4s** | **Extractable%** | **ROR%** |
| 0.22wt.% ETCH | 12.2 | 64.5 |
| 0.17wt.% ETCH / 0.039wt.% N-(n-propyl)maleimide | 6.9 | 55.5 |
| 0.21wt.% ETCH / 0.137wt.% N-(n-propyl)maleimide | 8.3 | 88.8 |
| 0.25wt.% ETCH / 0.039wt.% N-(n-propyl)maleimide | 8.6 | 85.1 |
| **75°C/7s** | **Extractable%** | **ROR%** |
| 0.22wt.% ETCH | 12.8 | 83.1 |
| 0.17wt.% ETCH / 0.234wt.% N-(n-propyl)maleimide | 9.7 | 91.7 |
| 0.21wt.% ETCH / 0.137wt.% N-(n-propyl)maleimide | 6.5 | 97.3 |
| 0.25wt.% ETCH / 0.039wt.% N-(n-propyl)maleimide | 5.5 | 99.3 |

In each instance in Table 5 above, the compositions solely using ETCH (inhibitor (E)) as inhibitor were inferior to those using combined inhibitors (D) and (E).

The terms "comprising" or "comprise" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples. The term "about" as used herein serves to reasonably encompass or describe minor variations in numerical values measured by instrumental analysis or as a result of sample handling. Such minor variations may be in the order

of ±0-25, ±0-10, ±0-5, or ±0-2.5, % of the numerical values. Further, The term "about" applies to both numerical values when associated with a range of values. Moreover, the term "about" may apply to numerical values even when not explicitly stated.

Generally, as used herein a hyphen "-" or dash "-" in a range of values is "to" or "through"; a ">" is "above" or "greater-than"; a "≥" is "at least" or "greater-than or equal to"; a "<" is "below" or "less-than"; and a "≤" is "at most" or "less-than or equal to." On an individual basis, each of the aforementioned applications for patent, patents, and/or patent application publications, is expressly incorporated herein by reference in its entirety in one or more nonlimiting embodiments.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, it is to be appreciated that different, special, and/or unexpected results may be obtained from each member of the respective Markush group independent from all other Markush members. Each member of a Markush group may be relied upon individually and or in combination and provides adequate support for specific embodiments within the scope of the appended claims.

It is also to be understood that any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

The present invention has been described herein in an illustrative manner, and it is to be understood that the terminology which has been used is intended to be in the nature of words of description rather than of limitation. Many modifications and variations of the present invention are possible in light of the above teachings. The present invention may be practiced otherwise than as specifically described within the scope of the appended claims. The subject matter of all combinations of independent and dependent claims, both single and multiple dependent, is herein expressly contemplated.

## Claims

**1.** A curable polysiloxane release coating composition, the composition comprising:

(A) an organopolysiloxane containing ethylenically unsaturated groups selected from:

(A1) a branched organopolysiloxane containing at least three (3) organopolysiloxane branch chains linked through a central core including at least two (2) organopolysiloxane branch chains each of which contain an ethylenically unsaturated group; and/or

(A2) a linear organopolysiloxane containing at least 2 ethylenically unsaturated groups having at least six (6) carbon atoms;

(B) an organopolysiloxane containing at least 2 Si-H groups per molecule, provided that if the organopolysiloxane (A) contains only 2 ethylenically unsaturated groups the organopolysiloxane (B) contains on average more than 2 Si-H groups per molecule;

(C) a hydrosilylation catalyst comprising a platinum group metal or a complex or compound of a platinum group metal; and

(D) a hydrosilylation inhibitor comprising a maleimide of the general formula (I):

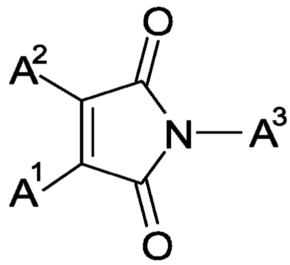

(I);

wherein $A^3$ represents a hydrogen atom or a hydrocarbyl or substituted hydrocarbyl group having 1 to 18 carbon atoms, and $A^1$ and $A^2$ each represent a hydrogen atom or a hydrocarbyl or substituted hydrocarbyl group having 1 to 18 carbon atoms.

**2.** The curable polysiloxane release coating composition according to claim 1, wherein the ethylenically unsaturated groups of the organopolysiloxane (A1) and/or organopolysiloxane (A2) are hexenyl groups.

**3.** The curable polysiloxane release coating composition according to claim 1 or 2, wherein the hydrosilylation inhibitor (D) comprises an N-alkylmaleimide in which the alkyl group has 1 to 12 carbon atoms.

**4.** The curable polysiloxane release coating composition according to any one of claims 1 to 3, wherein the hydrosilylation inhibitor (D) comprises N-(n-propyl)maleimide, N-(t-butyl)maleimide, or a combination thereof.

**5.** The curable polysiloxane release coating composition according to any one of claims 1 to 4, wherein the maleimide of formula (I) is present at a molar ratio of from about 1:1 to about 100:1 with respect to a platinum group metal or a complex or compound of a platinum group metal of the hydrosilylation catalyst (C).

**6.** The curable polysiloxane release coating composition according to any one of claims 1 to 5, further comprising (E) a second hydrosilylation inhibitor.

**7.** The curable polysiloxane release coating composition according to claim 6, wherein the second hydrosilylation inhibitor (E) is selected from acetylenic compounds, ethylenically unsaturated isocyanates, unsaturated dicarboxylic acid diesters, and combinations thereof.

**8.** The curable polysiloxane release coating composition according to claim 6 or 7, wherein the second hydrosilylation inhibitor (E) comprises an acetylenically unsaturated alcohol.

**9.** The curable polysiloxane release coating composition according to any one of claims 6 to 8, wherein the molar ratio of the maleimide of formula (I) to the second hydrosilylation inhibitor (E) present in the release coating composition is from about 50:1 to about 1:50, optionally from about 1:1 to about 1:50, or optionally from about 1:1 to about 4:1.

**10.** The curable polysiloxane release coating composition according to any of claims 1 to 9, wherein the organopolysiloxane (A1) is terminated by units of the formula $R^aR^b_2SiO_{1/2}$ and comprises one or more units of the formula $SiO_{4/2}$ or of the formula $R^cSiO_{3/2}$ and 15 to 995 units of the formula $R^b_2SiO_{2/2}$, wherein each $R^a$ substituent is selected from an alkyl group having 1 to 6 carbon atoms and an ethylenically unsaturated alkenyl group having 2 to 6 carbon atoms, at least 3 $R^a$ substituents in the branched organopolysiloxane (A1) being ethylenically unsaturated alkenyl groups, each $R^b$ substituent is an alkyl group having 1 to 6 carbon atoms or an aryl group, and each $R^c$ substituent is selected from an alkyl group having 1 to 6 carbon atoms, an ethylenically unsaturated alkenyl group having 2 to 6 carbon atoms, an aryl group or an alkoxy group having 1 to 6 carbon atoms.

**11.** A process of applying a polysiloxane release coating on the surface of a substrate, the process comprising the steps of:

1) coating the substrate with a curable polysiloxane release coating composition, wherein the composition comprises:

(A) an organopolysiloxane containing ethylenically unsaturated groups selected from:

(A1) a branched organopolysiloxane containing at least 3 organopolysiloxane branch chains linked through a central core including at least 2 organopolysiloxane branch chains each of which contain an ethylenically unsaturated group; and/or
(A2) a linear organopolysiloxane containing at least 2 ethylenically unsaturated groups having at least 6 carbon atoms;

(B) an organopolysiloxane containing at least 2 Si-H groups per molecule, provided that if the organopolysiloxane (A) contains only 2 ethylenically unsaturated groups the organopolysiloxane (B) contains on average more than 2 Si-H groups per molecule;
(C) a hydrosilylation catalyst comprising a platinum group metal or a complex or compound of a platinum group metal; and
(D) a hydrosilylation inhibitor comprising a maleimide of the general formula (I):

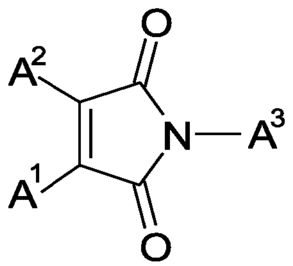

(I);

wherein $A^3$ represents a hydrogen atom or a hydrocarbyl or substituted hydrocarbyl group having 1 to 18 carbon atoms, and $A^1$ and $A^2$ each represent a hydrogen atom or a hydrocarbyl or substituted hydrocarbyl group having 1 to 18 carbon atoms; and

2) curing the curable polysiloxane release coating composition at a temperature of from about 50°C to about 130°C to form the release coating on the substrate.

**12.** The process according to claim 11, wherein the curable polysiloxane release composition is cured at a temperature of from about 70°C to about 100°C.

**13.** The process according to claim 11 or 12, wherein the composition is cured during a dwell time of from about 1 to about 50 second(s), or optionally a dwell time of from about 2 to about 10 seconds.

**14.** A substrate bearing a release coating obtained by the process according to any one of claims 11 to 13.

**15.** Use of a maleimide of the general formula (I):

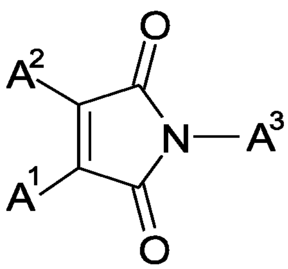

(I);

wherein $A^3$ represents a hydrogen atom or a hydrocarbyl or substituted hydrocarbyl group having 1 to 18 carbon atoms, and $A^1$ and $A^2$ each represent a hydrogen atom or a hydrocarbyl or substituted hydrocarbyl group having 1 to 18 carbon atoms, as a hydrosilylation inhibitor in a curable polysiloxane release coating composition, and wherein the composition comprises:

(A) an organopolysiloxane containing ethylenically unsaturated groups selected from:

(A1) a branched organopolysiloxane containing at least 3 organopolysiloxane branch chains linked through a central core including at least 2 organopolysiloxane branch chains each of which contain an ethylenically unsaturated group; and/or
(A2) a linear organopolysiloxane containing at least 2 ethylenically unsaturated groups having at least 6 carbon atoms;

(B) an organopolysiloxane containing at least 2 Si-H groups per molecule, provided that if the organopolysiloxane (A) contains only 2 ethylenically unsaturated groups the organopolysiloxane (B) contains on average more than 2 Si-H groups per molecule; and
(C) a hydrosilylation catalyst comprising a platinum group metal or a complex or compound of a platinum group metal.

## Patentansprüche

1. Eine härtbare Polysiloxantrennbeschichtungszusammensetzung, wobei die Zusammensetzung Folgendes beinhaltet:

(A) ein Organopolysiloxan, das ethylenisch ungesättigte Gruppen enthält, ausgewählt aus:

(A1) einem verzweigten Organopolysiloxan, das mindestens drei (3) Organopolysiloxanverzweigungsketten enthält, die durch einen zentralen Kern verbunden sind, der mindestens zwei (2) Organopolysiloxanverzweigungsketten umfasst, von denen jede eine ethylenisch ungesättigte Gruppe enthält; und/oder
(A2) einem linearen Organopolysiloxan, das mindestens 2 ethylenisch ungesättigte Gruppen enthält, die mindestens sechs (6) Kohlenstoffatome aufweisen;

(B) ein Organopolysiloxan, das mindestens 2 Si-H-Gruppen pro Molekül enthält, mit der Maßgabe, dass, wenn das Organopolysiloxan (A) nur 2 ethylenisch ungesättigte Gruppen enthält, das Organopolysiloxan (B) im Durchschnitt mehr als 2 Si-H-Gruppen pro Molekül enthält;
(C) einen Hydrosilylierungskatalysator, der ein Platingruppenmetall oder einen Komplex oder eine Verbindung von einem Platingruppenmetall beinhaltet; und
(D) einen Hydrosilylierungsinhibitor, der ein Maleimid der allgemeinen Formel (I) beinhaltet:

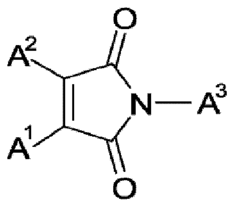

(I);

wobei $A^3$ ein Wasserstoffatom oder eine Hydrocarbyl- oder substituierte Hydrocarbylgruppe, die 1 bis 18 Kohlenstoffatome aufweist, darstellt und $A^1$ und $A^2$ jeweils ein Wasserstoffatom oder eine Hydrocarbyl- oder substituierte Hydrocarbylgruppe, die 1 bis 18 Kohlenstoffatome aufweist, darstellen.

2. Härtbare Polysiloxantrennbeschichtungszusammensetzung gemäß Anspruch 1, wobei die ethylenisch ungesättigten Gruppen des Organopolysiloxans (A1) und/oder Organopolysiloxans (A2) Hexenylgruppen sind.

3. Härtbare Polysiloxantrennbeschichtungszusammensetzung gemäß Anspruch 1 oder 2, wobei der Hydrosilylierungsinhibitor (D) ein N-Alkylmaleimid beinhaltet, in dem die Alkylgruppe 1 bis 12 Kohlenstoffatome aufweist.

4. Härtbare Polysiloxantrennbeschichtungszusammensetzung gemäß einem der Ansprüche 1 bis 3, wobei der Hydrosilylierungsinhibitor (D) N-(n-Propyl)maleimid, N-(t-Butyl)maleimid oder eine Kombination davon beinhaltet.

5. Härtbare Polysiloxantrennbeschichtungszusammensetzung gemäß einem der Ansprüche 1 bis 4, wobei das Maleimid der Formel (I) mit Bezug auf ein Platingruppenmetall oder einen Komplex oder eine Verbindung von einem Platingruppenmetall des Hydrosilylierungskatalysators (C) in einem Molverhältnis von etwa 1 : 1 bis etwa 100 : 1 vorhanden ist.

6. Härtbare Polysiloxantrennbeschichtungszusammensetzung gemäß einem der Ansprüche 1 bis 5, die ferner (E) einen zweiten Hydrosilylierungsinhibitor beinhaltet.

7. Härtbare Polysiloxantrennbeschichtungszusammensetzung gemäß Anspruch 6, wobei der zweite Hydrosilylierungsinhibitor (E) aus Acetylenverbindungen, ethylenisch ungesättigten Isocyanaten, ungesättigten Dicarbonsäurediestern und Kombinationen davon ausgewählt ist.

8. Härtbare Polysiloxantrennbeschichtungszusammensetzung gemäß Anspruch 6 oder 7, wobei der zweite Hydrosilylierungsinhibitor (E) einen acetylenisch ungesättigten Alkohol beinhaltet.

9. Härtbare Polysiloxantrennbeschichtungszusammensetzung gemäß einem der Ansprüche 6 bis 8, wobei das Molverhältnis des Maleimids der Formel (I) zu dem zweiten Hydrosilylierungsinhibitor (E), der in der Trennbeschichtungszusammensetzung vorhanden ist, etwa 50 : 1 bis etwa 1 : 50, optional etwa 1 : 1 bis etwa 1 : 50 oder optional etwa 1 : 1 bis etwa 4 : 1 beträgt.

10. Härtbare Polysiloxantrennbeschichtungszusammensetzung gemäß einem der Ansprüche 1 bis 9, wobei das Organopolysiloxan (A1) mit Einheiten der Formel $R^aR^b_2SiO_{1/2}$ terminiert ist und eine oder mehrere Einheiten der Formel $SiO_{4/2}$ oder der Formel $R^cSiO_{3/2}$ und 15 bis 995 Einheiten der Formel $R^b_2SiO_{2/2}$ beinhaltet, wobei jeder $R^a$-Substituent aus einer Alkylgruppe, die 1 bis 6 Kohlenstoffatome aufweist, und einer ethylenisch ungesättigten Alkenylgruppe, die 2 bis 6 Kohlenstoffatome aufweist, ausgewählt ist, wobei mindestens 3 $R^a$-Substituenten in dem verzweigten Organopolysiloxan (A1) ethylenisch ungesättigte Alkenylgruppen sind, wobei jeder $R^b$-Substituent eine Alkylgruppe, die 1 bis 6 Kohlenstoffatome aufweist, oder eine Arylgruppe ist und jeder $R^c$-Substituent aus einer Alkylgruppe, die 1 bis 6 Kohlenstoffatome aufweist, einer ethylenisch ungesättigten Alkenylgruppe, die 2 bis 6 Kohlenstoffatome aufweist, einer Arylgruppe oder einer Alkoxygruppe, die 1 bis 6 Kohlenstoffatome aufweist, ausgewählt ist.

11. Ein Verfahren zum Auftragen einer Polysiloxantrennbeschichtung auf die Oberfläche eines Substrats, wobei das Verfahren die folgenden Schritte beinhaltet:

1) Beschichten des Substrats mit einer härtbaren Polysiloxantrennbeschichtungszusammensetzung, wobei die Zusammensetzung Folgendes beinhaltet:

(A) ein Organopolysiloxan, das ethylenisch ungesättigte Gruppen enthält, ausgewählt aus:

(A1) einem verzweigten Organopolysiloxan, das mindestens 3 Organopolysiloxanverzweigungsketten enthält, die durch einen zentralen Kern verbunden sind, der mindestens 2 Organopolysiloxanverzweigungsketten umfasst, von denen jede eine ethylenisch ungesättigte Gruppe enthält; und/oder
(A2) einem linearen Organopolysiloxan, das mindestens 2 ethylenisch ungesättigte Gruppen enthält, die mindestens 6 Kohlenstoffatome aufweisen;

(B) ein Organopolysiloxan, das mindestens 2 Si-H-Gruppen pro Molekül enthält, mit der Maßgabe, dass, wenn das Organopolysiloxan (A) nur 2 ethylenisch ungesättigte Gruppen enthält, das Organopolysiloxan (B) im Durchschnitt mehr als 2 Si-H-Gruppen pro Molekül enthält;
(C) einen Hydrosilylierungskatalysator, der ein Platingruppenmetall oder einen Komplex oder eine Verbindung von einem Platingruppenmetall beinhaltet; und
(D) einen Hydrosilylierungsinhibitor, der ein Maleimid der allgemeinen Formel (I) beinhaltet:

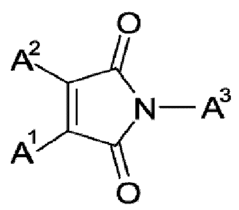

(I);

wobei $A^3$ ein Wasserstoffatom oder eine Hydrocarbyl- oder substituierte Hydrocarbylgruppe, die 1 bis 18 Kohlenstoffatome aufweist, darstellt und $A^1$ und $A^2$ jeweils ein Wasserstoffatom oder eine Hydrocarbyl- oder substituierte Hydrocarbylgruppe, die 1 bis 18 Kohlenstoffatome aufweist, darstellen; und

2) Härten der härtbaren Polysiloxantrennbeschichtungszusammensetzung bei einer Temperatur von etwa 50 °C bis etwa 130 °C, um die Trennbeschichtung auf dem Substrat zu bilden.

**12.** Verfahren gemäß Anspruch 11, wobei die härtbare Polysiloxantrennzusammensetzung bei einer Temperatur von etwa 70 °C bis etwa 100 °C gehärtet wird.

**13.** Verfahren gemäß Anspruch 11 oder 12, wobei die Zusammensetzung während einer Verweilzeit von etwa 1 bis etwa 50 Sekunde(n) oder optional einer Verweilzeit von etwa 2 bis etwa 10 Sekunden gehärtet wird.

**14.** Ein Substrat, das eine Trennbeschichtung trägt, die durch das Verfahren gemäß einem der Ansprüche 11 bis 13 erhalten wurde.

**15.** Verwendung eines Maleimids der allgemeinen Formel (I):

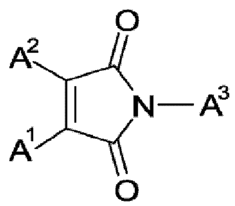

(I);

wobei $A^3$ ein Wasserstoffatom oder eine Hydrocarbyl- oder substituierte Hydrocarbylgruppe, die 1 bis 18 Kohlenstoffatome aufweist, darstellt und $A^1$ und $A^2$ jeweils ein Wasserstoffatom oder eine Hydrocarbyl- oder substituierte Hydrocarbylgruppe, die 1 bis 18 Kohlenstoffatome aufweist, darstellen, als ein Hydrosilylierungsinhibitor in einer härtbaren Polysiloxantrennbeschichtungszusammensetzung und wobei die Zusammensetzung Folgendes beinhaltet:

(A) ein Organopolysiloxan, das ethylenisch ungesättigte Gruppen enthält, ausgewählt aus:

(A1) einem verzweigten Organopolysiloxan, das mindestens 3 Organopolysiloxanverzweigungsketten enthält, die durch einen zentralen Kern verbunden sind, der mindestens 2 Organopolysiloxanverzweigungsketten umfasst, von denen jede eine ethylenisch ungesättigte Gruppe enthält; und/oder
(A2) einem linearen Organopolysiloxan, das mindestens 2 ethylenisch ungesättigte Gruppen enthält, die mindestens 6 Kohlenstoffatome aufweisen;

(B) ein Organopolysiloxan, das mindestens 2 Si-H-Gruppen pro Molekül enthält, mit der Maßgabe, dass, wenn das Organopolysiloxan (A) nur 2 ethylenisch ungesättigte Gruppen enthält, das Organopolysiloxan (B) im Durchschnitt mehr als 2 Si-H-Gruppen pro Molekül enthält; und
(C) einen Hydrosilylierungskatalysator, der ein Platingruppenmetall oder einen Komplex oder eine Verbindung von einem Platingruppenmetall beinhaltet.

## Revendications

**1.** Une composition de revêtement antiadhésif en polysiloxane durcissable, la composition comprenant :

(A) un organopolysiloxane contenant des groupes éthyléniquement insaturés sélectionnés parmi :

(A1) un organopolysiloxane ramifié contenant au moins trois (3) chaînes de ramification organopolysiloxane liées par l'intermédiaire d'un noyau central incluant au moins deux (2) chaînes de ramification organopolysiloxane, chacune desquelles contient un groupe éthyléniquement insaturé ; et/ou
(A2) un organopolysiloxane linéaire contenant au moins 2 groupes éthyléniquement insaturés ayant au

moins six (6) atomes de carbone ;

(B) un organopolysiloxane contenant au moins 2 groupes Si-H par molécule, à la condition que si l'organopolysiloxane (A) ne contient que 2 groupes éthyléniquement insaturés, l'organopolysiloxane (B) contienne en moyenne plus de 2 groupes Si-H par molécule ;
(C) un catalyseur d'hydrosilylation comprenant un métal du groupe du platine ou un complexe ou composé d'un métal du groupe du platine ; et
(D) un inhibiteur d'hydrosilylation comprenant un maléimide de la formule générale (I) :

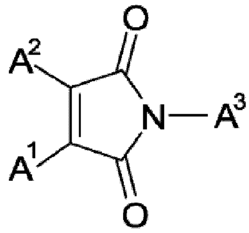

(I) ;

où $A^3$ représente un atome d'hydrogène ou un groupe hydrocarbyle ou hydrocarbyle substitué ayant de 1 à 18 atomes de carbone, et $A^1$ et $A^2$ représentent chacun un atome d'hydrogène ou un groupe hydrocarbyle ou hydrocarbyle substitué ayant de 1 à 18 atomes de carbone.

2. La composition de revêtement antiadhésif en polysiloxane durcissable selon la revendication 1, où les groupes éthyléniquement insaturés de l'organopolysiloxane (A1) et/ou l'organopolysiloxane (A2) sont des groupes hexényle.

3. La composition de revêtement antiadhésif en polysiloxane durcissable selon la revendication 1 ou la revendication 2, où l'inhibiteur d'hydrosilylation (D) comprend un N-alkylmaléimide dans lequel le groupe alkyle a de 1 à 12 atomes de carbone.

4. La composition de revêtement antiadhésif en polysiloxane durcissable selon n'importe laquelle des revendications 1 à 3, où l'inhibiteur d'hydrosilylation (D) comprend du N-(n-propyl)maléimide, du N-(t-butyl)maléimide, ou une combinaison de ceux-ci.

5. La composition de revêtement antiadhésif en polysiloxane durcissable selon n'importe laquelle des revendications 1 à 4, où le maléimide de formule (I) est présent à un rapport molaire allant d'environ 1/1 à environ 100/1 relativement à un métal du groupe du platine ou un complexe ou composé d'un métal du groupe du platine du catalyseur d'hydrosilylation (C).

6. La composition de revêtement antiadhésif en polysiloxane durcissable selon n'importe laquelle des revendications 1 à 5, comprenant en outre (E) un deuxième inhibiteur d'hydrosilylation.

7. La composition de revêtement antiadhésif en polysiloxane durcissable selon la revendication 6, où le deuxième inhibiteur d'hydrosilylation (E) est sélectionné parmi des composés acétyléniques, des isocyanates éthyléniquement insaturés, des diesters d'acide dicarboxylique insaturés, et des combinaisons de ceux-ci.

8. La composition de revêtement antiadhésif en polysiloxane durcissable selon la revendication 6 ou la revendication 7, où le deuxième inhibiteur d'hydrosilylation (E) comprend un alcool acétyléniquement insaturé.

9. La composition de revêtement antiadhésif en polysiloxane durcissable selon n'importe laquelle des revendications 6 à 8, où le rapport molaire du maléimide de formule (I) au deuxième inhibiteur d'hydrosilylation (E) présent dans la composition de revêtement antiadhésif va d'environ 50/1 à environ 1/50, facultativement d'environ 1/1 à environ 1/50, ou facultativement d'environ 1/1 à environ 4/1.

10. La composition de revêtement antiadhésif en polysiloxane durcissable selon n'importe lesquelles des revendications 1 à 9, où l'organopolysiloxane (A1) est terminé par des unités de la formule $R^aR^b_2SiO_{1/2}$ et comprend une ou plusieurs unités de la formule $SiO_{4/2}$ ou de la formule $R^cSiO_{3/2}$ et de 15 à 995 unités de la formule $R^b_2SiO_{2/2}$, où chaque substituant $R^a$ est sélectionné parmi un groupe alkyle ayant de 1 à 6 atomes de carbone et un groupe

alcényle éthyléniquement insaturé ayant de 2 à 6 atomes de carbone, au moins 3 substituants $R^a$ dans l'organopolysiloxane ramifié (A1) étant des groupes alcényle éthyléniquement insaturés, chaque substituant $R^b$ est un groupe alkyle ayant de 1 à 6 atomes de carbone ou un groupe aryle, et chaque substituant $R^c$ est sélectionné parmi un groupe alkyle ayant de 1 à 6 atomes de carbone, un groupe alcényle éthyléniquement insaturé ayant de 2 à 6 atomes de carbone, un groupe aryle ou un groupe alcoxy ayant de 1 à 6 atomes de carbone.

**11.** Un procédé d'application d'un revêtement antiadhésif en polysiloxane sur la surface d'un substrat, le procédé comprenant les étapes consistant :

1) à revêtir le substrat avec une composition de revêtement antiadhésif en polysiloxane durcissable, où la composition comprend :

(A) un organopolysiloxane contenant des groupes éthyléniquement insaturés sélectionnés parmi :

(A1) un organopolysiloxane ramifié contenant au moins 3 chaînes de ramification organopolysiloxane liées par l'intermédiaire d'un noyau central incluant au moins 2 chaînes de ramification organopolysiloxane, chacune desquelles contient un groupe éthyléniquement insaturé ; et/ou
(A2) un organopolysiloxane linéaire contenant au moins 2 groupes éthyléniquement insaturés ayant au moins 6 atomes de carbone ;

(B) un organopolysiloxane contenant au moins 2 groupes Si-H par molécule, à la condition que si l'organopolysiloxane (A) ne contient que 2 groupes éthyléniquement insaturés, l'organopolysiloxane (B) contienne en moyenne plus de 2 groupes Si-H par molécule ;
(C) un catalyseur d'hydrosilylation comprenant un métal du groupe du platine ou un complexe ou composé d'un métal du groupe du platine ; et
(D) un inhibiteur d'hydrosilylation comprenant un maléimide de la formule générale (I) :

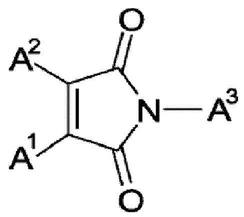

(I) ;

où $A^3$ représente un atome d'hydrogène ou un groupe hydrocarbyle ou hydrocarbyle substitué ayant de 1 à 18 atomes de carbone, et $A^1$ et $A^2$ représentent chacun un atome d'hydrogène ou un groupe hydrocarbyle ou hydrocarbyle substitué ayant de 1 à 18 atomes de carbone ; et

2) à durcir la composition de revêtement antiadhésif en polysiloxane durcissable à une température allant d'environ 50 °C à environ 130 °C afin de former le revêtement antiadhésif sur le substrat.

**12.** Le procédé selon la revendication 11, où la composition antiadhésive en polysiloxane durcissable est durcie à une température allant d'environ 70 °C à environ 100 °C.

**13.** Le procédé selon la revendication 11 ou la revendication 12, où la composition est durcie pendant un temps de séjour allant d'environ 1 à environ 50 seconde(s), ou facultativement un temps de séjour allant d'environ 2 à environ 10 secondes.

**14.** Un substrat portant un revêtement antiadhésif obtenu par le procédé selon n'importe laquelle des revendications 11 à 13.

**15.** Utilisation d'un maléimide de la formule générale (I) :

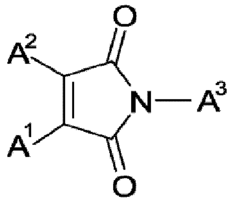

(I) ;

où $A^3$ représente un atome d'hydrogène ou un groupe hydrocarbyle ou hydrocarbyle substitué ayant de 1 à 18 atomes de carbone, et $A^1$ et $A^2$ représentent chacun un atome d'hydrogène ou un groupe hydrocarbyle ou hydrocarbyle substitué ayant de 1 à 18 atomes de carbone, en tant qu'inhibiteur d'hydrosilylation dans une composition de revêtement antiadhésif en polysiloxane durcissable, et où la composition comprend :

(A) un organopolysiloxane contenant des groupes éthyléniquement insaturés sélectionnés parmi :

(A1) un organopolysiloxane ramifié contenant au moins 3 chaînes de ramification organopolysiloxane liées par l'intermédiaire d'un noyau central incluant au moins 2 chaînes de ramification organopolysiloxane, chacune desquelles contient un groupe éthyléniquement insaturé ; et/ou
(A2) un organopolysiloxane linéaire contenant au moins 2 groupes éthyléniquement insaturés ayant au moins 6 atomes de carbone ;

(B) un organopolysiloxane contenant au moins 2 groupes Si-H par molécule, à la condition que si l'organopolysiloxane (A) ne contient que 2 groupes éthyléniquement insaturés, l'organopolysiloxane (B) contienne en moyenne plus de 2 groupes Si-H par molécule ; et
(C) un catalyseur d'hydrosilylation comprenant un métal du groupe du platine ou un complexe ou composé d'un métal du groupe du platine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6806339 B2
- US 4530989 A
- US 7238755 B
- US 4609574 A
- WO 03050174 A
- WO 2006055233 A
- WO 2004046267 A